# EUROPÄISCHE PATENTANMELDUNG

(11) **EP 2 471 485 A1**
(43) Veröffentlichungstag der Anmeldung: **04.07.2012**
(21) Anmeldenummer: 11006047.2
(22) Anmeldetag: 23.07.2011
(51) Int. Cl.: A61C 8/00

(54) **Adapter zum Übertragen eines Torsionsmoments auf den Aufbauteil eines Dentalimplantats**

(30) Priorität: 28.12.2010 EP 10016128
(71) Anmelder: Straumann Holding AG, 4002 Basel (CH)
(72) Erfinder: Bugnard, Guillaume, 4002 Basel (CH)
(74) Vertreter: Schaad, Balass, Menzl & Partner AG

(57) **Zusammenfassung**

Die Erfindung betrifft einen Adapter (10, 110) zum Übertragen eines Torsionsmoments von einem Eindrehwerkzeug auf einen Aufbauteil eines Dentalimplantats, insbesondere zum Eindrehen des Dentalimplantats in einen Knochen oder des Aufbauteils in einen Verankerungsteil. Der Adapter (10, 110) weist einen Kopfabschnitt (20, 120), der mit dem Eindrehwerkzeug zusammenwirken kann, einen Halsabschnitt (30, 130) und einen Aufnahmeabschnitt (40, 140), der mit dem Aufbauteil des Dentalimplantats lösbar verbindbar ist, auf. Der Adapter (10, 110) weist mindestens eine Schwächungszone in Form einer in Umfangsrichtung verlaufenden Nut (32, 132) im Halsabschnitt (30, 130) auf und verformt sich oberhalb eines vorgegebenen Torsionsmoments T_{deform} im Bereich der Schwächungszone. Im Bereich der Schwächungszone weist der Adapter (10, 110) zudem eine separat ausgebildete Verstärkung auf, welche einem allfälligen bei der Übertragung des Torsionsmoments auf den Adapter (10, 110) auftretenden Biegemoment entgegenwirkt.

## Beschreibung

Die vorliegende Erfindung betrifft einen Adapter zum Übertragen eines Torsionsmoments von einem Eindrehwerkzeug auf den Aufbauteil eines Dentalimplantats gemäss dem Oberbegriff des Anspruchs 1.

Die Verwendung von Dentalimplantaten als künstlichen Ersatz für Zahnwurzeln hat sich in den letzten Jahren etabliert. Es gibt verschiedene Formen von Dentalimplantaten, wobei sich insbesondere die schraubenförmigen Implantate bewährt haben. Typischerweise werden Dentalimplantate aus Titan oder aus verschiedenen Keramiken verwendet.

Schraubenförmige Dentalimplantate bestehen üblicherweise aus einem Verankerungsteil zur Verankerung des Implantats im Knochen und einem Aufbauteil, auf dem eine Suprakonstruktion, beispielsweise eine Krone, befestigt werden kann. Wenn Verankerungsteil und Aufbauteil als ein einziges Bauteil ausgebildet sind, spricht man von einem einteiligen Implantat. Alternativ werden auch zweiteilige Implantate verwendet, bei denen Verankerungsteil und Aufbauteil als zwei separate Bauteile ausgebildet sind.

Zum Fixieren eines schraubenförmigen Dentalimplantats im Knochen wird das Implantat in ein passendes Bohrloch eingeschraubt. Am Aufbauteil des Implantats wird dann die Suprakonstruktion (Krone) befestigt.

Um das Eindrehen eines Dentalimplantats in den Knochen zu ermöglichen, weisen konventionelle Implantate im Bereich des Verankerungsteils und/oder des Aufbauteils üblicherweise ein Innengewinde zur Befestigung eines einschraubbaren Adapters auf, an dem ein Eindrehwerkzeug zum Übertragen eines Torsionsmoments auf das Implantat befestigt werden kann. Solche einschraubbaren Adapter sind beispielsweise aus EP 1 038 506, WO 2008/071368 oder EP 0 811 358 bekannt. Alternativ kann ein entsprechend geformter Adapter auch auf den Aufbauteil aufgesteckt und beispielsweise mittels Formschluss mit diesem verbunden werden. Zum Eindrehen wird auf den auf das Implantat aufgesteckten oder im Innengewinde des Implantats verankerten Adapter ein Torsionsmoment ausgeübt, beispielsweise mit Hilfe einer Ratsche. Anschliessend wird der Adapter wieder vom Dentalimplantat gelöst.

Beim Eindrehen besteht das Risiko, dass ein zu grosses Torsionsmoment auf das Dentalimplantat übertragen wird und damit eine zu grosse Kraft auf den Aufbauteil oder den Knochen ausgeübt wird, was zu Knochenresorption führen kann. Insbesondere dann, wenn ein auf das Implantat aufgesteckter Adapter verwendet wird, besteht zudem das Risiko, dass auf dem Implantat Spuren vom Adapter zurückbleiben oder dass das Implantat gar beschädigt wird. Allfällige Adapter-Spuren auf dem Aufbauteil sind nicht nur unschön, sondern können auch zu einer verminderten Haftung der Suprakonstruktion am Aufbauteil führen. Das Implantat kann sowohl innerlich, zum Beispiel durch Bildung von Mikrorissen, als auch äusserlich, beispielsweise durch teilweise Zerstörung einer osteointegrativen Oberfläche, beschädigt werden.

Ausserdem kann durch ein zu grosses Torsionsmoment auch das Knochengewebe rund um das Bohrloch beschädigt werden, in welches das Dentalimplantat eingeschraubt werden soll. Eine solche Beeinträchtigung des Knochengewebes kann zu einer verminderten Osteointegration und damit zu einer verschlechterten Verankerung des Implantats im Knochen führen.

Eine Beschädigung des Dentalimplantats oder des Knochengewebes kann dadurch verhindert werden, dass zum Übertragen des Torsionsmoments auf den Adapter ein sogenannter Drehmomentschlüssel verwendet wird, bei dem sich ein maximal übertragbares Drehmoment einstellen lässt. Dabei wird ein Adapter auf das Implantat aufgesteckt oder im Innengewinde des Implantats verankert und dann mithilfe eines Drehmomentschlüssels, der als Ratsche wirkt, ein Drehmoment auf den mit dem Aufbauteil des Implantats verbundenen Adapter ausgeübt. Um die Unversehrtheit von Implantat und Knochengewebe zu garantieren, ist es zwingend notwendig, einen speziellen Drehmomentschlüssel zu benutzen, dessen maximales Drehmoment auf das verwendete Implantat abgestimmt ist.

Drehmomentschlüssel sind verhältnismässig teuer. Ausserdem ist es notwendig, dass der Anwender das maximale Drehmoment je nach Material auf das verwendete Implantat abstimmt. Drehmomentschlüssel sind zudem drehsinnabhängig, d.h. wenn sie verkehrt montiert oder verwendet werden, ist die Drehmomentbegrenzung nicht gegeben.

Es ist eine Aufgabe der vorliegenden Erfindung, einen einfach herstellbaren und leicht handhabbaren Adapter zum Übertragen eines Torsionsmoments auf den Aufbauteil eines Dentalimplantats zur Verfügung zu stellen, mit Hilfe dessen - unabhängig von der Wahl des Eindrehwerkzeugs und vom Drehsinn - sichergestellt wird, dass das Implantat oder das umliegende Knochengewebe nicht beschädigt wird. Diese Aufgabe wird gelöst durch den Adapter gemäss Anspruch 1. Bevorzugte Ausführungsformen sind Gegenstand der abhängigen Ansprüche.

Die vorliegende Erfindung betrifft einen Adapter zum Übertragen eines Torsionsmoments von einem Eindrehwerkzeug auf einen Aufbauteil eines Dentalimplantats. Die Übertragung des Torsionsmoments auf den Aufbauteil dient entweder zum Eindrehen des einen schraubenförmigen Verankerungsteil aufweisenden Dentalimplantats in einen Knochen oder zum Einschrauben des Aufbauteils in einen Verankerungsteil. Der erfindungsgemässe Adapter dient dazu, das Torsionsmoment, das übertragen werden kann, nach oben zu begrenzen und gleichzeitig eine Beeinflussung durch ein Biegemoment zu verhindern.

Im Rahmen dieser Anmeldung wird der Begriff "Torsionsmoment" für ein Drehmoment verwendet, das eine reine Rotation um eine (Längs-)Achse bewirkt. Der Begriff "Biegemoment" demgegenüber bezeichnet ein Drehmoment, welches diese (Längs-)Achse auf Biegung belastet.

Der erfindungsgemässe Adapter weist entlang einer mittig angeordneten Längsachse einen Kopfabschnitt, einen Halsabschnitt und einen Aufnahmeabschnitt auf. Kopfabschnitt, Halsabschnitt und Aufnahmeabschnitt sind starr miteinander verbunden. Der Kopfabschnitt ist derart ausgebildet, dass er mit dem Eindrehwerkzeug zum Übertragen des Torsionsmoments zusammenwirken kann. Der Halsabschnitt ist zwischen dem Kopfabschnitt und dem Aufnahmeabschnitt angeordnet und ist vorzugsweise schmaler als der Kopf- und/oder Aufnahmeabschnitt ausgebildet. Der Aufnahmeabschnitt weist eine mantelförmige Wandung auf, die eine sacklochförmige Ausnehmung zur Aufnahme des Aufbauteils des Dentalimplantats begrenzt, über die der Aufnahmeabschnitt mit dem Aufbauteil des Dentalimplantats durch Formschluss lösbar verbunden werden kann.

Der erfindungsgemässe Adapter weist mindestens eine Schwächungszone in form einer in Umfangsrichtung verlaufenden Nut im Halsabschnitt auf und verformt sich im Bereich der Schwächungszone oberhalb eines vorgegebenen Torsionsmoments T_{deform}. Vorzugsweise verformt sich der Adapter oberhalb des vorgegebenen Torsionsmoments T_{deform} plastisch und/oder elastisch.

Die mindestens eine Schwächungszone ist als eine in Umfangsrichtung verlaufende Nut im Halsabschnitt des Adapters ausgebildet. Eine derartige Anordnung der Schwächungszone ist insbesondere dazu geeignet, die Übertragung eines zu hohen Torsionsmoments "automatisch" zu stoppen: Der Adapter bricht an dieser Stelle, sobald ein vorgegebenes maximales Torsionsmoment überschritten wird, und die weitere Drehmoment-Übertragung wird verhindert. Der Halsabschnitt weist also eine Art "Sollbruchstelle" auf, dank derer die Übertragung eines zu hohen Torsionsmoments vermieden werden kann.

Der erfindungsgemässe Adapter ist derart ausgebildet, dass er auf den Aufbauteil eines Dentalimplantats aufgesteckt werden kann und nach dem Eindrehen des Dentalimplantats in einen Knochen - oder des Aufbauteils in einen Verankerungsteil - problemlos wieder vom Aufbauteil gelöst werden kann. Der Adapter eignet sich sowohl für einteilige als auch für zweiteilige Dentalimplantate, und kann insbesondere auch dazu verwendet werden, ein Dentalimplantat in den Knochen einzudrehen.

Der Kopfabschnitt des Adapters ist derart ausgebildet, dass mit einem Eindrehwerkzeug ein Torsionsmoment auf den Adapter und damit auf den damit verbundenen Aufbauteil des Dentalimplantats übertragen werden kann. Als Eindrehwerkzeug kann beispielsweise eine Ratsche verwendet werden. Alternativ kann auch mittels eines Schraubenschlüssels oder eines Drehmomentschlüssels ein Drehmoment auf den Adapter übertragen werden. Ein Drehmomentschlüssel zeigt das nominelle Drehmoment an und erlaubt so eine zusätzliche Überprüfung durch den Anwender, während der Adapter gemäss der vorliegenden Erfindung die Drehmomentbegrenzung sicherstellt.

Die mindestens eine, als in Umfangsrichtung verlaufende Nut im Halsabschnitt ausgestaltete Schwächungszone des erfindungsgemässen Adapters führt dazu, dass er sich oberhalb eines vorgegebenen Torsionsmoments T_{deform} verformt, insbesondere plastisch und/oder elastisch. Unterhalb des vorgegebenen Torsionsmoments ist der Adapter stabil. Erst oberhalb des vorgegebenen Torsionsmoments T_{deform} beginnt der Adapter, sich zu verformen. Dadurch erkennt der Anwender, dass ein zu hohes Torsionsmoments aufgewendet wird und dass die Drehmoment-Übertragung zu stoppen ist.

Vorzugsweise ist die Schwächungszone derart ausgestaltet, dass der Adapter bei (fortgesetzter) überhöhter Drehmoment-Übertragung in diesem Bereich bricht. Auf diese Weise wird wirksam verhindert, dass das Dentalimplantat und/oder das umliegende Knochengewebe beim Eindrehen des Dentalimplantats beschädigt werden.

Beim Eindrehen des Aufbauteils wird mittels eines geeigneten Werkzeugs ein Torsionsmoment auf den erfindungsgemässen Adapter übertragen. Typischerweise weist ein solches Drehwerkzeug einen Angriffbereich, der mit dem Adapter lösbar verbunden werden kann, und einen damit verbundenen, griffförmigen Haltebereich auf, der dem Anwender als Hebel für die Übertragung des Torsionsmoments dient. Solange das Drehwerkzeug, und insbesondere der Haltebereich, genau in einer Wirkebene, die senkrecht zur Längsachse A des Adapters liegt, bewegt wird, findet eine reine Torsionsmoment-Übertragung statt. Es wirken also einzig Rotationskräfte. Sobald aber der Haltebereich aus dieser Wirkebene herausbewegt wird, d.h. das Drehwerkzeug relativ zur Längsachse A des Adapters aus dem rechten Winkel in einen spitzen oder stumpfen Winkel gebracht wird, treten auch Kräfte auf, die parallel zur Längsachse A wirken und ein Biegemoment auf den Adapter ausüben.

Es kann also vorkommen, z. B. wenn das Werkzeug vom Anwender nicht ganz gerade gehalten wird, dass nebst dem in radialer Richtung wirkenden Torsionsmoment auch noch eine im Wesentlichen axiale Biegekraft auf den Kopfabschnitt des Adapters ausgeübt wird. Eine solche Biegekraft kann insbesondere bei denjenigen Ausführungsformen, welche einen schmaleren Halsabschnitt aufweisen, dazu führen, dass sich der Adapter relativ zu seiner Längsachse verbiegt, d.h. gewinkelt wird, und dass der Adapter deshalb im Bereich der Schwächungszone sich schon bei einem tieferen Drehmoment verformt, als eigentlich vorgesehen. Um ein ungewolltes Verbiegen des Adapters zu vermeiden, weist der erfindungsgemässe Adapter daher im Bereich der Schwächungszone eine zusätzliche Verstärkung auf.

Beim erfindungsgemässen Adapter dient die Verstärkung nun dazu, die Belastung durch ein Biegemoment zu minimieren: Dank der Verstärkung wirkt auf die Schwächungszone nur das für das Eindrehen notwendige Torsionsmoment, welches in der senkrecht zur Längsachse A des Adapters verlaufenden Wirkebene ausgeübt wird, während Kräfte, die nicht in dieser Wirkebene liegen, vermieden werden.

Eine Verstärkung im Sinne der vorliegenden Erfindung umschliesst die nutförmige Schwächungszone im Halsbereich vorzugsweise vollständig und verhindert so in diesem Bereich ein Verbiegen oder Abwinkeln des Adapters relativ zur Längsachse A. Die Verstärkung ist separat ausgebildet; sie ist also insbesondere nicht Teil der Schwächungszone.

Mögliche Ausführungsformen einer solchen Verstärkung sind beispielsweise ein Ring, z. B. ein O-Ring, oder eine Überbrückung, welche zusätzlich zur Schwächungszone auch noch einen axial daran angrenzenden Bereich des Halsabschnitts umgibt. Eine solche Überbrückung umgreift die Nut und kann optional zusätzlich auch noch in die Nut eingreifen. Sowohl Ring als auch Überbrückung verlaufen in Umfangsrichtung des Adapters.

In einer ersten bevorzugten Ausführungsform ist die Verstärkung ein in die Nut eingelegter, ebenfalls in Umfangsrichtung verlaufender Ring, vorzugsweise ein O-Ring. Ein solcher Ring lässt sich relativ leicht anbringen und verhindert wirksam, dass der Adapter während der Drehmoment-Übertragung verbogen wird.

In einer zweiten bevorzugten Ausführungsform ist die Verstärkung eine die Nut umgreifende, ebenfalls in Umfangsrichtung verlaufende Überbrückung. Auch eine Überbrückung lässt sich relativ leicht anbringen und verhindert wirksam, dass der Adapter während der Drehmoment-Übertragung verbogen wird.

Vorzugsweise umschliesst die Überbrückung die Schwächungszone und einen axial an die Schwächungszone angrenzenden Teil des Halsabschnitts. Dadurch wird der gesamte umschlossene Bereich bezüglich einer Biegekraft versteift. Besonders bevorzugt ist es, dass die Überbrückung (95) zusätzlich in die Schwächungszone (32, 132) eingreift. Dadurch wird die Schwächungszone in Bezug auf ein Biegemoment zusätzlich stabilisiert.

Die Verwendung einer Überbrückung, die nebst der Schwächungszone auch noch einen weiteren Teil des Halsabschnitts umschliesst, hat den zusätzlichen Vorteil, dass sie auch nach dem Bruch des Adapters die Teile zusammenhalten kann und so ein Herunterfallen von Bruchstücken verhindert. Zur weiteren Verbesserung der Verbindung zwischen Überbrückung und Halsabschnitt kann letzterer zudem eine oder mehrere weitere Vertiefungen aufweisen, in welche die Überbrückung eingreifen kann. Solche Vertiefungen verlaufen vorzugsweise in Umfangsrichtung.

Bei einer bevorzugten Ausführungsform weist der Halsabschnitt daher mindestens eine weitere, in Umfangsrichtung verlaufende Vertiefung auf, in welche die Überbrückung eingreift. Dadurch wird verhindert, dass sich die Überbrückung während der Anwendung ungewollt parallel zur Längsachse des Adapters verschieben kann.

Die Verstärkung ist vorzugsweise aus einem harten Kunststoff oder aus einem Metall oder einer Metalllegierung, z. B. Titan oder Stahl, insbesondere aus rostfreiem Stahl, gefertigt. Diese Materialien erlauben eine optimale Stabilisation des Adapters bezüglich eines Biegemoments, können nötigenfalls problemlos sterilisiert werden und lassen sich leicht in die gewünschte Form bringen.

Zusätzlich zu der nutförmigen Schwächungszone im Halsbereich kann der erfindungsgemässe Adapter auch eine weitere, als Kerbe oder Schlitz an der Innen- oder Aussenseite der mantelförmigen Wandung des Aufnahmeabschnitts ausgebildete Schwächungszone aufweisen. Eine solche als Kerbe oder Schlitz ausgebildete Schwächungszone weitet sich auf, wenn das vorgegebene Torsionsmoment T_{deform} überschritten wird, insbesondere in einem Endbereich des Schlitzes. Es ist auch denkbar, mehrere Kerben und/oder Schlitze miteinander zu kombinieren, insbesondere eine in radialer Richtung um den Adapter verlaufende Schwächungszone mit einer parallel zur Längsachse des Adapters verlaufenden Schwächungszone in Form einer Kerbe oder eines Schlitzes.

Die mindestens eine Schwächungszone des Adapters kann beliebig gross sein.

Die Verwendung eines erfindungsgemässen Adapters zum Übertragen eines Torsionsmoments von einem Eindrehwerkzeug auf den Aufbauteil eines Dentalimplantats ermöglicht es, unabhängig von der Wahl des Eindrehwerkzeugs, eine Beschädigung des Implantats oder des umliegenden Knochengewebes beim Eindrehen zu verhindern. Gleichzeitig wird aber garantiert, dass ein genügend grosses Torsionsmoment auf den Aufbauteil übertragen wird, so dass das Dentalimplantat ausreichend fest im Knochen, bzw. der Aufbauteil genügend fest im Verankerungsteil, verankert wird. Der Adapter ist ausserdem drehsinnunabhängig, kann also - im Gegensatz zu einem Drehmomentschlüssel - für beide Drehrichtungen eingesetzt werden und stellt dabei eine Drehmomentbegrenzung sicher.

Bei Verwendung des erfindungsgemässen Adapters kann auf einen Drehmomentschlüssel verzichtet werden: Beim Eindrehen erkennt der Anwender aufgrund der Verformung des Adapters sofort, dass ein zu hohes Torsionsmoment eingesetzt wird, und kann eine Beschädigung des Dentalimplantats oder des Knochengewebes verhindern. Zudem ist die Schwächungszone vorzugsweise derart ausgestaltet, dass der Adapter bei fortgesetzter überhöhter Drehmoment-Übertragung bricht und die Drehmoment-Übertragung auf diese Weise gestoppt wird. Es ist aber durchaus denkbar, dass zusätzlich zum erfindungsgemässen Adapter ein Drehmomentschlüssel eingesetzt wird, der dem Anwender während der Anwendung zusätzlich das aktuelle nominelle Drehmoment anzeigt.

Geeignete Werte für T_{deform} sind grundsätzlich abhängig von Material, Form und Durchmesser des Aufbauteils und des Dentalimplantats, das eingedreht werden soll. Ein Fachmann auf dem Gebiet der Dentalimplantologie kann diese Werte ohne grösseren experimentellen Aufwand leicht bestimmen.

In einer bevorzugten Ausführungsform ist T_{deform} grösser als 35 Ncm, vorzugsweise grösser als 80 Ncm, insbesondere grösser als 90 Ncm. Durch die Wahl eines geeigneten minimalen Werts von T_{deform} wird sichergestellt, dass das Dentalimplantat beim Eindrehen genügend fest im Knochen - respektive der Aufbauteil genügend fest im Verankerungsteil - verankert wird.

In einer bevorzugten Ausführungsform ist T_{deform} kleiner als 150 Ncm, vorzugsweise kleiner als 130 Ncm, insbesondere kleiner als 110 Ncm. Durch die Wahl eines geeigneten maximalen Drehmoments wird garantiert, dass das Dentalimplantat und das umliegende Knochengewebe beim Eindrehen nicht beschädigt werden.

In einer bevorzugten Ausführungsform weist der Kopfabschnitt im Wesentlichen die Form eines polygonalen Zylinders mit mehreren, parallel zur Längsachse verlaufenden Kanten oder andere formschlüssige Verbindungen, wie z. B. Torx, auf. Insbesondere weist der Kopfabschnitt im Wesentlichen die Form eines hexagonalen oder oktagonalen Zylinders auf. Eine solche Ausbildung des Kopfabschnitts erlaubt es, ein Eindrehwerkzeug wie eine Ratsche, einen gewöhnlichen Schraubenschlüssel oder einen Drehmomentschlüssel mit dem Kopfabschnitt zu verbinden und ein Torsionsmoment auf den Adapter zu übertragen. Alternativ ist es auch möglich, dass der Kopfabschnitt einen Innensechskant, Innenachtkant oder eine andere, nach innen ausgebildete formschlüssige Verbindung, z. B. einen Innen-Torx aufweist, welche mit einem Eindrehwerkzeug zusammenwirken kann.

Bei einer bevorzugten Ausführungsform des erfindungsgemässen Adapters ist die sacklochförmige Ausnehmung im Wesentlichen kegelstumpfförmig und verjüngt sich gegen den Kopfbereich hin. Alternativ kann die sacklochförmige Ausnehmung auch im Wesentlichen zylindrisch oder gestuft zylindrisch ausgestaltet sein. Eine solche Form ist optimal auf die heutzutage übliche Form von Aufbauteilen von Dentalimplantaten abgestimmt.

Vorzugsweise weist die sacklochförmige Ausnehmung mindestens eine Anschlagfläche zum Übertragen des Torsionsmoments vom Adapter auf den Aufbauteil auf, die mit je einer entsprechenden Gegenfläche des Aufbauteils eine bis mindestens zum Drehmoment T_{deform} drehsichere Verbindung bildet. Eine solche Anschlagfläche gewährleistet, dass beim Drehen des Adapters der Aufbauteil in seinem Innern mitgedreht wird. Wird das vorgegebene Drehmoment T_{deform} überschritten, so löst sich vorzugsweise bei denjenigen Ausführungsformen, bei denen eine zusätzliche Schwächungszone im Aufnahmeabschnitt des Adapters angeordnet ist, diese drehsichere Verbindung.

Besonders bevorzugt ist es, dass die sacklochförmige Ausnehmung im Aufnahmeabschnitt mehrere Anschlagflächen aufweist, insbesondere zwei, vier oder sechs Anschlagflächen. Bei mehreren Anschlagflächen wird das zu übertragende Torsionsmoment auch auf mehrere entsprechende Gegenflächen des Aufbauteils des Implantats übertragen, so dass die Krafteinwirkung auf die einzelne Fläche kleiner und damit auch die Gefahr einer Beschädigung geringer ist. Zudem kann auf diese Weise auch wirksam verhindert werden, dass durch den Adapter Spuren, insbesondere durch Abrieb, auf der Implantatoberfläche hinterlassen werden.

In einer bevorzugten Ausführungsform besteht der erfindungsgemässe Adapter aus Metall, wie z. B. rostfreiem Stahl, Titan oder einer Titanlegierung, oder aus anderen biokompatiblen Werkstoffen, wie Polymeren, faserverstärkten Polymeren oder Keramiken. Der Adapter kann zusätzlich mit einer Hartschicht, z. B. Titannitrid, Zirkonnitrid oder Chromnitrid versehen sein. Diese Materialien erlauben eine einfach Herstellung und Sterilisation und gewährleisten die Biokompatibilität des Adapters.

Besonders bevorzugt ist es, dass der Adapter aus rostfreiem Stahl, beispielsweise aus 1.4441 Stahl (X2CrNiMo18-15-3; enthält 17.0-19.0 Gewichtsprozent Chrom, 13.0-15.0 Gewichtsprozent Nickel, 2.7-3.0 Gewichtsprozent Molybdän, 1.4-2.0 Gewichtsprozent Mangan und max. 0.03 Gewichtsprozent Kohlenstoff, max. 1.0 Gewichtsprozent Silizium, max. 0.025 Gewichtsprozent Phosphor, max. 0.06 Gewichtsprozent Schwefel, max. 0.1 Gewichtsprozent Kupfer und max. 0.1 Gewichtsprozent Stickstoff) gefertigt ist.

Diese Materialien sind besonders gut geeignet, da sie einerseits eine gute Stabilität des Adapters unterhalb des Torsionsmoments T_{deform} garantieren und da andererseits ein sauberer Bruch entsteht, wenn T_{deform} überschritten wird. So können (Metall-) Splitter verhindert werden, die allenfalls zu Verletzungen oder Irritationen in der Mundhöhle und insbesondere im Bereich der Implantationsstelle führen könnten.

Bei einem aus Metall oder einer Metalllegierung bestehenden Adapter ist es besonders bevorzugt, dass die Innenseite des Aufnahmeabschnitts zumindest teilweise mit einem Material beschichtet ist, das keine Spuren auf der Implantatoberfläche hinterlässt. Dies ist insbesondere bei Keramikimplantaten von grossem Vorteil. Daher ist eine Keramikbeschichtung oder eine Beschichtung aus DLC ("diamond like carbon") besonders bevorzugt. Diese Beschichtung bedeckt vorzugsweise zumindest diejenigen Bereiche der Innenseite des Aufnahmeabschnitts, die während des Eindrehens in direktem Kontakt mit dem Dentalimplantat sind. Besonders bevorzugt ist es, dass die gesamte Innenseite des Aufnahmeabschnitts des Adapters mit DLC oder einer Keramik beschichtet ist.

Alternativ kann der Adapter auch mindestens teilweise aus einem keramischen oder brüchigen Material bestehen, so dass er bei der Übertragung eines zu hohen Drehmoments im Bereich der Schwächungszone bricht.

Vorzugsweise ist der Adapter einstückig ausgebildet. Alternativ ist es aber auch möglich, den erfindungsgemässen Adapter zwei- oder mehrstückig auszubilden. So kann beispielsweise nur der Aufnahmeabschnitt aus einer Keramik ausgebildet sein, während der Kopf- und/oder Halsabschnitt aus einem Metall gefertigt sind. Alternativ kann aber auch der Aufnahmeabschnitt mit einer Keramik oder einem ähnlichen Material beschichtet sein, das keine Spuren, insbesondere keine sichtbaren Spuren durch Abrieb, auf der Implantatoberfläche hinterlässt. Vorzugsweise ist der Aufnahmeabschnitt aus demselben Material gefertigt oder damit beschichtet, wie der Aufbauteil des Dentalimplantats, der darin aufgenommen werden soll, insbesondere aus derselben Keramik, so dass der Adapter keinerlei Spuren auf dem Aufbauteil hinterlässt.

Im Weiteren betrifft die vorliegende Erfindung ebenfalls die Verwendung des erfindungsgemässen Adapters zum Übertragen eines Torsionsmoments auf einen keramischen Aufbauteil eines Dentalimplantats. Dabei treten die oben beschriebenen Vorteile des Adapters ganz besonders in den Vordergrund: Keramische Aufbauteile und Dentalimplantate sind in der Regel weiss oder sehr hell, so dass allfällige Spuren des Adapters besonders gut sichtbar wären. Ausserdem brechen keramische Implantate verhältnismässig leicht unter Beanspruchung.

Der erfindungsgemässe Adapter ist aber auch vorzüglich dazu geeignet, Dentalimplantate aus Metal einzudrehen.

Er kann sowohl für einteilige als auch für zweiteilige Dentalimplantate verwendet werden.

Vorzugsweise wird das mit dem erfindungsgemässen Adapter verbundene Dentalimplantat durch eine Bohrschablone, insbesondere in Kombination mit einer Bohrhülse, in einen Knochen eingedreht. Zu diesem Zweck ist der erfindungsgemässe Adapter vorzugsweise derart ausgestaltet, dass er nicht nur durch die Bohrschablone und/oder die Bohrhülse hindurch verwendet werden kann, sondern gleichzeitig von dieser geführt wird. Auf diese Weise kann durch die Bohrschablone und/oder die Bohrhülse die Orientierung des mit dem Implantat verbundenen Adapters festgelegt werden, so dass das Implantat genau in der Achse des Bohrlochs eingedreht wird.

In einer bevorzugten Ausführungsform wird der erfindungsgemässe Adapter auch dazu verwendet, das Dentalimplantat aus dessen Verpackung zu entnehmen. Implantate sind für Transport und Lagerung, üblicherweise einzeln, steril verpackt und werden erst kurz vor dem Eindrehen in einen Knochen aus dieser Verpackung entnommen. Um eine Kontaminierung des sterilen Implantats zu verhindern, wird das Implantat vorzugsweise mithilfe des erfindungsgemässen Adapters aus der Verpackung entnommen. Zu diesem Zweck wird der Aufbauteil des Dentalimplantats noch in der Verpackung mit dem Adapter verbunden, indem letzterer auf den Aufbauteil aufgesteckt wird, und dann das Implantat zusammen mit dem Adapter entnommen .

Vorzugsweise weist der erfindungsgemässe Adapter eine Markierung auf, die die Lage der Anschlagfläche in der sacklochförmigen Ausnehmung anzeigt, so dass die Anschlagfläche direkt mit der entsprechenden Gegenfläche des Aufbauteils des Dentalimplantats in Verbindung gebracht werden kann. Eine solche Markierung kann beispielsweise als Punkt oder Strich in einer von der Farbe des Adapters unterscheidbaren Farbe ausgestaltet sein. Alternativ kann auch die Schwächungszone, insbesondere wenn eine zweite Schwächungszone in Form eines Schlitzes axialer Richtung, als Markierung dienen. Es ist ausserdem denkbar, dass das Dentalimplantat oder seine Verpackung ebenfalls eine Orientierungshilfe aufweist, gegenüber welcher die Markierung am Adapter beim Aufstecken ausgerichtet werden soll. Eine solche Orientierungshilfe kann beispielsweise als farblich verschiedener Punkt oder Strich ausgestaltet sein. Alternativ wäre auch ein Vorsprung oder eine Vertiefung in der Verpackung denkbar. Besonders bevorzugt ist es, dass die Verpackung einen Vorsprung in Längsrichtung des Dentalimplantats aufweist, der mit einer als Schlitz oder als eine in Längsrichtung des Adapters eingebrachte Aussparung ausgestalteten Schwächungszone des Adapters zusammenwirken kann und diesen führt.

Es zeigt:
- Fig. 1: eine schematische Darstellung einer ersten einstückigen Ausführungsform eines erfindungsgemässen Adapters;
- Fig. 2: eine Schrägansicht des Adapters aus Fig. 1, ohne die Verstärkung;
- Fig. 3a, b und c: je einen Teil dreier erfindungsgemässer Adapter mit sich voneinander unterscheidenden Verstärkungen im Bereich des Halsabschnitts;
- Fig. 4: eine schematische Darstellung eines Adapters, der mit einem Eindrehwerkzeug verbunden ist;
- Fig. 5a und b: einen Teil eines Adapters ohne Verstärkung im Bereich der Schwächungszone, welcher unbelastet ist (a), bzw. der sich unter Einwirkung eines Biegemoments verbogen hat (b);
- Fig. 6: eine schematische Darstellung einer zweiten einstückigen Ausführungsform eines erfindungsgemässen Adapters;
- Fig. 7: eine schematische Darstellung einer dritten einstückigen Ausführungsform eines erfindungsgemässen Adapters;
- Fig. 8: eine schematische Darstellung einer vierten einstückigen Ausführungsform eines erfindungsgemässen Adapters;
- Fig. 9: eine schematische Darstellung einer fünften einstückigen Ausführungsform eines erfindungsgemässen Adapters;
- Fig. 10: einen Längsschnitt durch eine zweistückige Ausführungsform eines erfindungsgemässen Adapters;
- Fig. 11: einen Längsschnitt durch einen Verbindungsteil des zweistückigen Adapters aus Fig. 10;
- Fig. 12: einen Längsschnitt durch einen Befestigungsteil des zweistückigen Adapters aus Fig. 10;
- Fig. 13: eine schematische Darstellung einer sechsten einstückigen Ausführungsform eines erfindungsgemässen Adapters;
- Fig. 14: eine perspektivische Ansicht des Adapters aus Figur 13; und
- Fig. 15: eine perspektivische Ansicht des koronalen Bereichs eines Dentalimplantats.

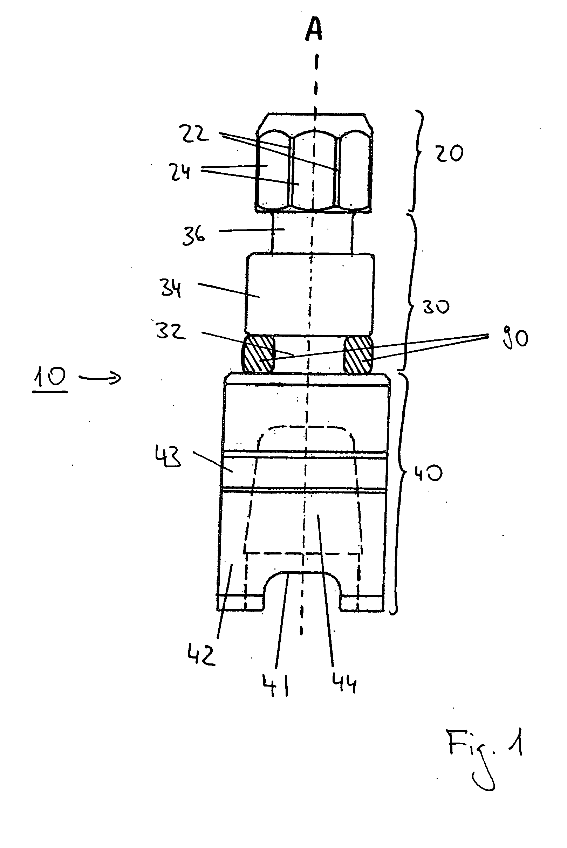

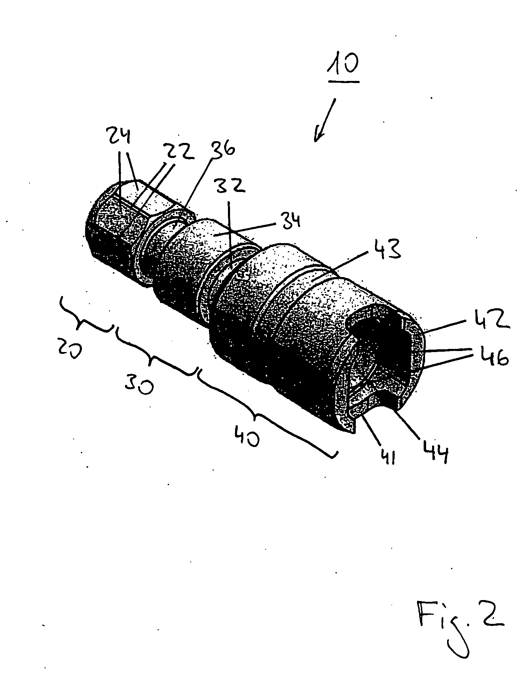

Der in den Figuren 1 und 2 gezeigte Adapter 10 zum Übertragen eines Torsionsmoments von einem Eindrehwerkzeug auf den Aufbauteil eines Dentalimplantats ist einstückig aus rostfreiem Stahl oder einem der anderen, oben erwähnten biokompatiblen Materialien gefertigt. Der Adapter 10 weist entlang einer mittig angeordneten Längsachse A einen Kopfabschnitt 20, einen Halsabschnitt 30 und einen Aufnahmeabschnitt 40 auf, die starr miteinander verbundenen sind.

Der Kopfabschnitt 20 ist als hexagonaler Zylinder ausgebildet, wobei sechs parallel zur Längsachse verlaufenden Kanten 22 sechs Zylinderflächen 24 in Umfangsrichtung begrenzen. Aufgrund dieser Form kann zur Drehmomentübertragung ein Eindrehwerkzeug mit einem entsprechenden Innensechskant formschlüssig auf den Kopfabschnitt 20 aufgesetzt werden. Alternativ wären auch andere formschlüssige Verbindungen, wie ein Torx oder ein Achtkant, denkbar.

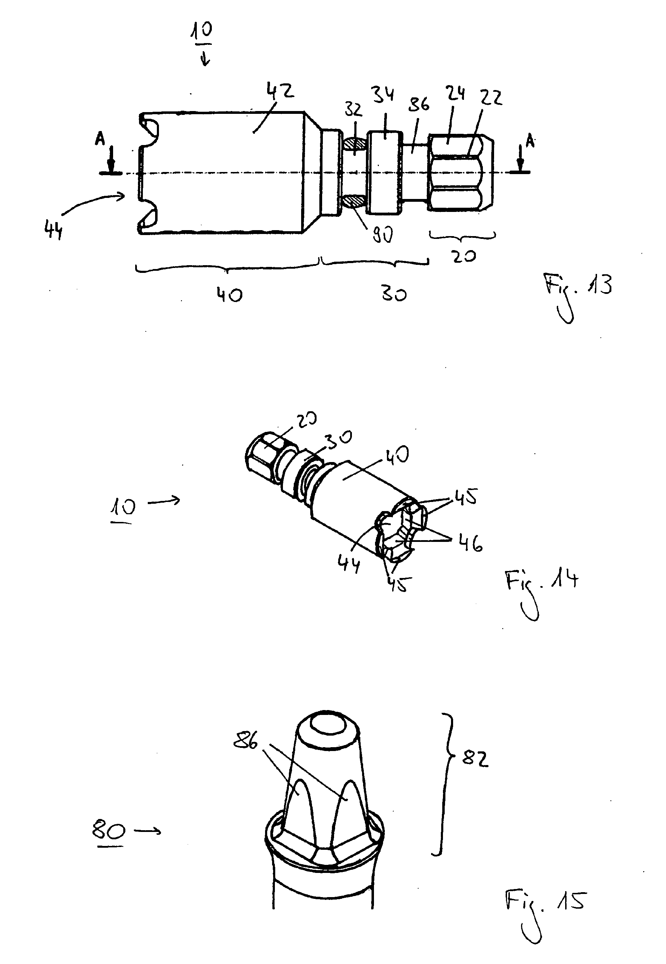

Der Aufnahmeabschnitt 40 weist eine mantelförmige Wandung 42 auf, die eine sacklochförmige Ausnehmung 44 zur Aufnahme des Aufbauteils des Dentalimplantats (siehe Figur 15) begrenzt, über die der Aufnahmeabschnitt 40 des Adapters 10 mit dem Aufbauteil des Dentalimplantats durch Formschluss lösbar verbindbar ist. In der mantelförmigen Wandung 42 weist der gezeigte Adapter eine in Umfangsrichtung verlaufende, umlaufende Rille 43 auf, sowie zwei auf der dem Kopfbereich 20 abgewandten Seite angeordnete Aussparungen 41.

Die sacklochförmige Ausnehmung 44 ist im Wesentlichen kegelstumpfförmig und verjüngt sich gegen den Kopfbereich 20 hin. Alternativ könnte die sacklochförmige Ausnehmung 44 auch zylindrisch oder gestuft zylindrisch ausgebildet sein. Die sacklochförmige Ausnehmung 44 weist zwei Anschlagflächen 46 (nur in Figur 2 sichtbar) auf zum Übertragen des Torsionsmoments vom Adapter 10 auf den Aufbauteil des Dentalimplantats, die mit je einer entsprechenden Gegenfläche des Aufbauteils eine bis mindestens zum Torsionsmoment T_{deform} drehsichere Verbindung bilden.

Der in den Figuren 1 und 2 gezeigte Adapter 10 weist im Bereich des Halsabschnitts 30 eine im Wesentlichen kreiszylinderförmige Schwächungszone auf, die als in Umfangsrichtung verlaufende Nut 32 ausgebildet ist und den Adapter 10 vollständig umläuft. Alternativ wäre es auch möglich, dass die Nut 32 stellenweise unterbrochen ist. Wird bei der Drehmomentübertragung vom erfindungsgemässen Adapter 10 auf ein Dentalimplantat ein vorgegebenes Torsionsmoment T_{deform} überschritten, so verformt sich der Adapter 10 im Bereich der Schwächungszone plastisch und/oder elastisch. Vorzugsweise bricht der Adapter 10 im Bereich der Nut 32, sobald T_{deform} überschritten wird.

Ausserdem weist der Adapter 10 im Halsabschnitt 30 einen im Wesentlichen kreiszylinderförmigen, breiten Bereich 34 sowie einen ebenfalls im Wesentlichen kreiszylinderförmigen, schmaleren Bereich 36 auf, wobei der breite Bereich 34 zwischen der Schwächungszone und dem schmaleren Bereich 36 angeordnet ist. Der schmalere Bereich 36 unterscheidet sich von der die Schwächungszone bildenden Nut 32 dadurch, dass er einen grösseren Durchmesser hat als letztere und sich daher erst bei einem höheren Torsionsmoment verformen bzw. brechen würde, als dies bei der Schwächungszone der Fall ist. Daher verformt sich bzw. bricht der Adapter 10 bei der Übertragung eines zunehmend grösseren Torsionsmoments zunächst im Bereich der Schwächungszone. Die Schwächungszone 32 ist in der gezeigten Ausführungsform dem Aufnahmeabschnitt 40 zugewandt und der schmalere Bereich 36 dem Kopfabschnitt 20. Alternativ könnten die Schwächungszone 32 und der schmalere Bereich 36 auch vertauscht angeordnet sein.

Der gezeigte Adapter 10 weist im Bereich der Schwächungszone zudem eine Verstärkung in Form eines in Umfangsrichtung verlaufenden Rings 90 auf (in Figur 2 nicht gezeigt), welcher in die Nut 32 eingelegt ist. Der Querschnitt des Rings 90 ist an die Form der Nut 32 angepasst. Der Ring 90 dient dazu, ein Verbiegen des Adapters 10 bezüglich seiner Längsachse A im Bereich der Schwächungszone zu verhindern. Dazu stützt der Ring 90, welcher im übrigen nicht mit dem Adapter 10 verbunden ist, die vom Kopfabschnitt 20 abgewandte Seite des breiten Bereichs 34 und die dem Kopfabschnitt 20 zugewandte Seite des Aufnahmeabschnitts 40. Der gezeigte Ring 90 besteht aus hartem Kunststoff, könnte alternativ aber auch aus Metall bestehen.

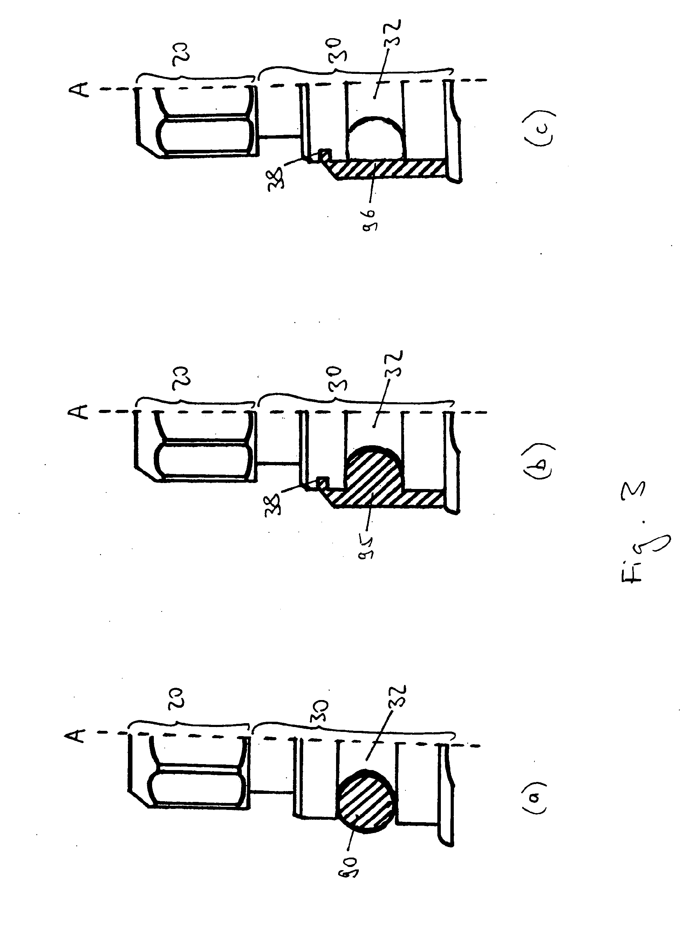

Die Figuren 3a, b und c zeigen jeweils einen Teil eines erfindungsgemässen Adapters 10, bei welchem im Bereich der Schwächungszone in Form einer umlaufenden Nut 32 im Halsabschnitt 30 eine Verstärkung angeordnet ist. Diese Verstärkung kann beispielsweise in Form eines Rings 90 (Figur 3a) oder einer Überbrückung 95, 96 (Figuren 3b und 3c) vorliegen. Grundsätzlich können alle drei gezeigten Ausführungsformen der Verstärkung beliebig mit den verschiedenen in den anderen Figuren gezeigten Ausführungsformen der Adapter 10, 110 kombiniert werden.

Der in Figur 3a gezeigte Ring 90 ist ein O-Ring, d.h. er hat einen kreisförmigen Querschnitt, und besteht aus hartem Kunststoff. Er ist in die umlaufende Nut 32 eingelegt, jedoch nicht mit dieser verbunden. Alternativ könnte auch der Ring 90 auch aus einem Metall, beispielsweise aus rostfreiem Stahl, Titan oder einer Titanlegierung, bestehen.

Die in den Figuren 3b und 3c gezeigten Überbrückungen 95. 96 umgreifen nicht nur die Nut 32 in Umfangsrichtung, sondern umschliessen auch noch einen weiteren, axial angrenzenden Teil des Halsabschnitts 30. Zur besseren Verbindung der Überbrückungen 95, 96 mit dem Halsabschnitt 30 weist letzterer in den beiden gezeigten Ausführungsformen zusätzlich eine in Umfangsrichtung verlaufende Vertiefung 38 auf, in welche die Überbrückungen 95, 96 eingreifen. Die Überbrückungen 95, 96 bestehen vorzugsweise aus hartem Kunststoff, rostfreiem Stahl, Titan oder einer Titanlegierung.

Bei der in Figur 3b gezeigten Ausführungsform greift die Überbrückung 95 zusätzlich in die Nut 32 ein, während die in Figur 3c gezeigte Überbrückung 96 die Nut 32 nur überspannt aber nicht in diese hineinragt. Durch einen Eingriff der Überbrückung 95 in die Nut 32 wird die Schwächungszone weiter versteift.

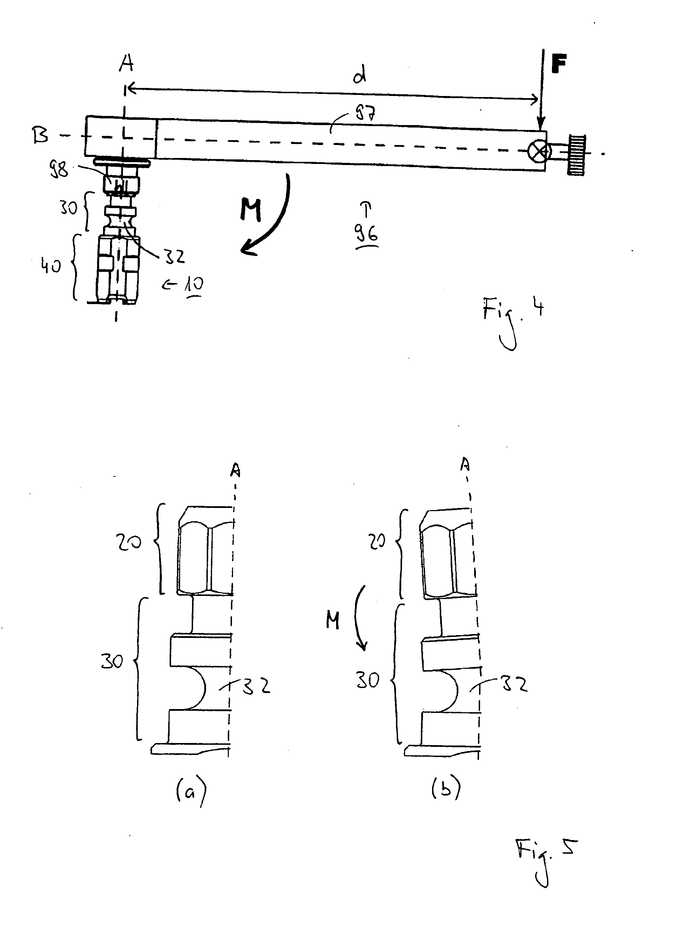

Figur 4 zeigt eine schematische Darstellung eines Adapters 10, der lösbar mit einem Eindrehwerkzeug 96 verbunden ist. Der Adapter 10 entspricht im Wesentlichen den in den anderen Figuren gezeigten Adaptern 10, 110 und weist entlang seiner Längsachse A einen Kopfabschnitt (nicht sichtbar), einen Halsabschnitt 30 und einen Aufnahmeabschnitt 40 auf. Im Halsabschnitt 30 ist eine Schwächungszone in Form einer umlaufenden Nut 32 vorhanden. Der in Figur 4 gezeigte Adapter 10 weist jedoch keine Verstärkung auf im Bereich dieser Schwächungszone.

Das Eindrehwerkzeug 96 umfasst einen griffförmigen Haltebereich 97 mit einer Längsachse B und einen mit dem griffförmigen Haltebereich 97 verbundenen, an einem Ende des griffförmigen Haltebereichs 97 angeordneten und im Wesentlichen senkrecht zur Längsachse B des griffförmigen Haltebereichs 97 verlaufenden Angriffbereich 98 auf. Der Angriffbereich 98 dient dazu, eine lösbare Verbindung mit dem Kopfabschnitt des Adapters 10 herzustellen und so eine Torsionsmomentübertragung vom Eindrehwerkzeug 96 auf den Adapter 10 zu ermöglichen. Bei der in Figur 14 gezeigten Ausführungsform wird der Angriffbereich 98 des Eindrehwerkzeugs 96 auf den Kopfabschnitt des Adapters 10 aufgesetzt. Zu diesem Zweck weist der Angriffbereich 98 beispielsweise einen Innensechskant oder Innenachtkant auf und der Kopfabschnitt des Adapters 10 einen korrespondierenden Aussensechs- oder Aussenachtkant.

Zum Eindrehen eines Dentalimplantats mithilfe von Adapter 10 und Eindrehwerkzeug 96 wird durch Rotieren des griffförmigen Haltebereichs 97 um die Längsachse A des Adapters 10 ein Torsionsmoment auf den Adapter 10 übertragen. Wenn der Anwender beim Rotieren des Eindrehwerkzeugs 96 die Längsachse B des griffförmigen Haltebereichs 97 nicht genau senkrecht zur Längsachse A des Adapters 10 bewegt, wird zusätzlich zum gewünschten Torsionsmoment auch noch ein Biegemoment M auf den Adapter 10 ausgeübt. Wenn der Anwender beispielsweise eine Kraft F auf dasjenige Ende des griffförmigen Haltebereichs 97 ausübt, das dem Angriffbereich 98 gegenüberliegt, so führt dies dazu, dass der Adapter 10 zusätzlich ein Biegemoment M erfährt, das zu einer unerwünschten zusätzlichen Belastung der Schwächungszone führt. Die Stärke des Biegemoments M hängt dabei von der Kraft F und der Länge d des griffförmigen Haltebereichs 97 ab.

Ein solches Biegemoment M kann insbesondere dazu führen, dass der Adapter 10 bezüglich seiner Längsachse A gekrümmt wird. Figur 5a zeigt diesbezüglich einen Teil eines unbelasteten Adapters, während auf den Adapter in Figur 5b ein Biegemoment M wirkt, das ein Verbiegen des Adapters im Bereich der Schwächungszone verursacht.

Die Schwächungszone eines verbogenen Adapters, welche eine doppelte Belastung durch ein reines Torsionsmoment (senkrecht zur Längsachse A) und ein Biegemoment M erfährt, verformt respektive bricht jedoch bereits bei einem tieferen Torsionsmoment als ein Adapter, auf den kein Biegemoment M ausgeübt wird. Dies kann dazu führen, dass das Implantat nicht fest genug eingeschraubt wird.

Durch die beim erfindungsgemässen Adapter 10 vorhandene Verstärkung wird ein Verbiegen des Adapters 10 im Bereich der Schwächungszone vermieden und Interferenzen eines Biegemoments M mit dem reinen Torsionsmoment verhindert. Die Verstärkung dient also im Wesentlichen dazu, das Torsionsmoment von einem Biegemoment zu entkoppeln.

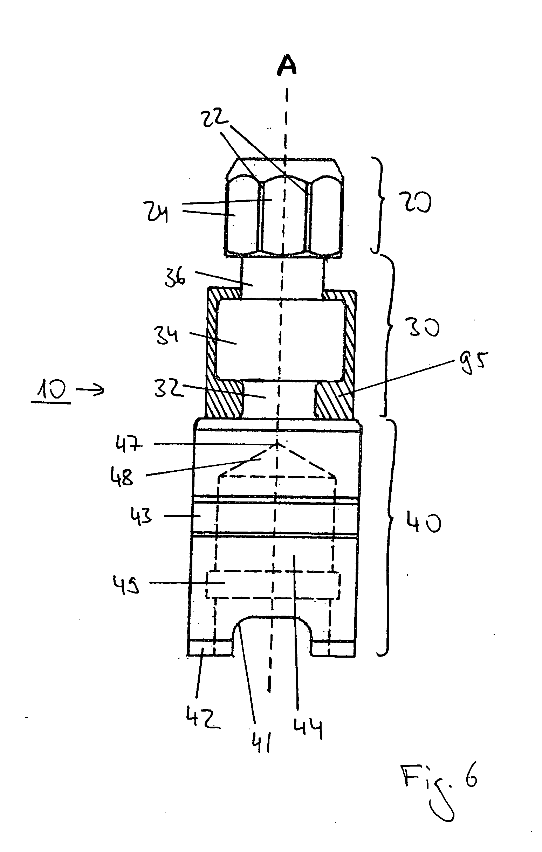

Figur 6 zeigt eine zweite Ausführungsform eines einstückigen erfindungsgemässen Adapters 10, welche sich von der in den Figuren 1 und 2 gezeigten durch die Form der sacklochförmigen Ausnehmung 44 und der Verstärkung im Bereich der Schwächungszone unterscheidet.

Die sacklochförmige Ausnehmung 44 ist beim in Figur 6 gezeigten Adapter 10 im Wesentlichen kreiszylinderförmig ausgestaltet und weist an ihrem dem Kopfabschnitt 20 zugewandten Ende 47 einen kegelförmigen Abschnitt 48 auf. Ausserdem weist die sacklochförmige Ausnehmung 44 eine die Innenseite der mantelförmigen Wandung 42 des Aufnahmeabschnitts 40 radial umlaufende Kerbe 49 auf.

Der in Figur 6 gezeigt Adapter 10 weist eine Verstärkung in Form einer Überbrückung 95 auf. Diese Überbrückung 95 besteht vorzugsweise aus Metall, beispielsweise aus rostfreiem Stahl, und umschliesst nebst der Nut 32 auch noch den angrenzenden breiten Bereich 34. Die Überbrückung 95 greift in die Nut 32 ein, wobei der Querschnitt der Überbrückung 95 in diesem Bereich an die Form der Nut 32 angepasst ist. An ihrem dem Kopfbereich 20 zugewandten Ende greift die gezeigte Überbrückung 95 zudem in den schmalen Bereich 36 ein. Alternativ könnte der in Figur 6 gezeigte Adapter 10 aber auch eine andere Form der Verstärkung aufweisen, beispielsweise einen in die Nut 32 eingelegten Ring (vgl. Figur 3a).

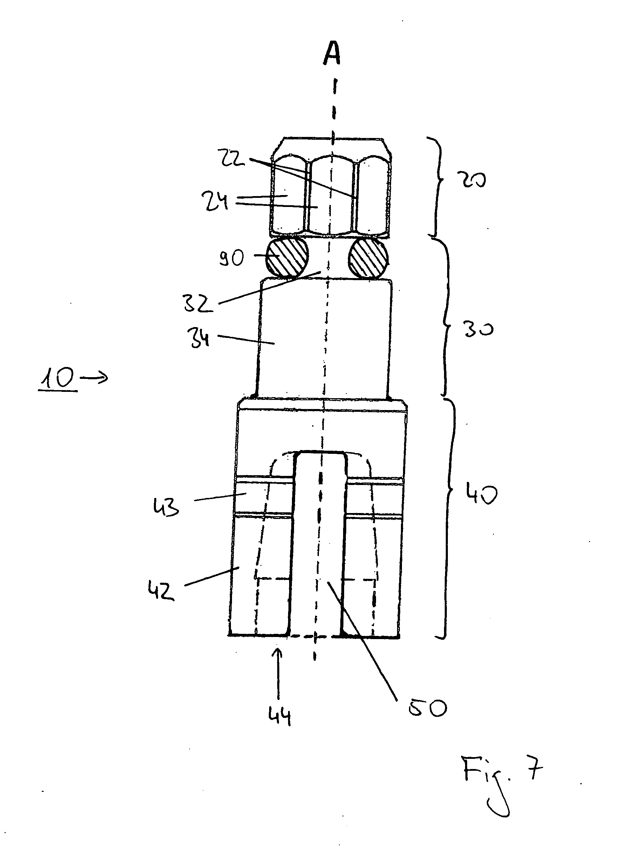

Der in Figur 7 gezeigte, einstückige erfindungsgemässe Adapter 10 weist ebenfalls entlang der mittig angeordneten Längsachse A einen Kopfabschnitt 20, einen Halsabschnitt 30 und einen Aufnahmeabschnitt 40 auf, die starr miteinander verbundenen sind. In dieser dritten Ausführungsform ist jedoch eine zweite Schwächungszone als Schlitz 50 in der mantelförmigen Wandung 42 des Aufnahmeabschnitts ausgebildet. Dieser Schlitz 50 verläuft im Wesentlichen parallel zur Längsachse A. Die im Bereich der Schwächungszone im Halsabschnitt 30 angeordnete Verstärkung hat die Form eines in die Nut 32 eingelegten O-Rings.

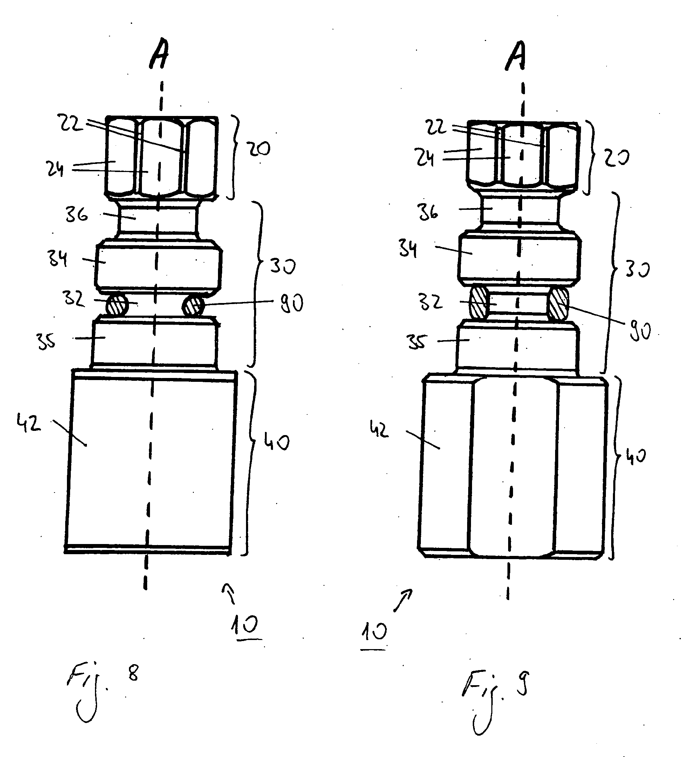

Figuren 8 und 9 zeigen zwei weitere Ausführungsformen des einstückigen Adapters 10. Sie unterscheiden sich von denjenigen aus den Figuren 1, 6 und 7 insbesondere durch die Gestaltung von Kopfabschnitt 20, Halsabschnitt 30 und Aufnahmeabschnitt 40. So variiert bei den verschiedenen Ausführungsformen die (relative) Höhe des Kopfabschnitts 20, die Ausgestaltung des Halsabschnitts 30 und die Form der mandelförmigen Wandung 42 des Aufnahmeabschnitts 40. Beide Adapter 10 weisen eine ringförmige Verstärkung 90 auf, die in die Nut 32 eingelegt ist.

Die in den Figuren 8 und 9 gezeigten Adapter 10 weisen beispielsweise beide nebst der Schwächungszone, dem breiten Bereich 34 und dem schmalen Bereich 36 einen zweiten breiten Bereich 35 auf. Zudem ist die Nut 32 beim in Figur 8 gezeigten Adapter 10 schmaler und weniger hoch ausgestaltet als bei den anderen Ausführungsformen. Es hat sich gezeigt, dass diese in Figur 8 gezeigte Form der Nut 32 eine optimale Konzentrierung der auf den Adapter 10 wirkenden Kräfte während des Eindrehens erlaubt, so dass er bei der Anwendung eines zu hohen Drehmoments in einem möglichst eng begrenzten Bereich in der Schwächungszone und möglichst rechtwinklig zur Längsachse A bricht.

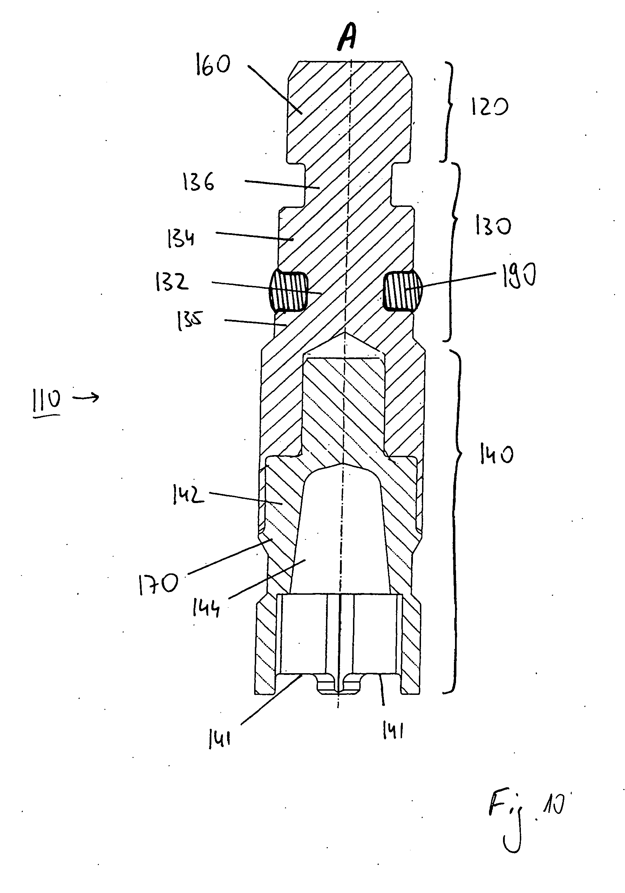

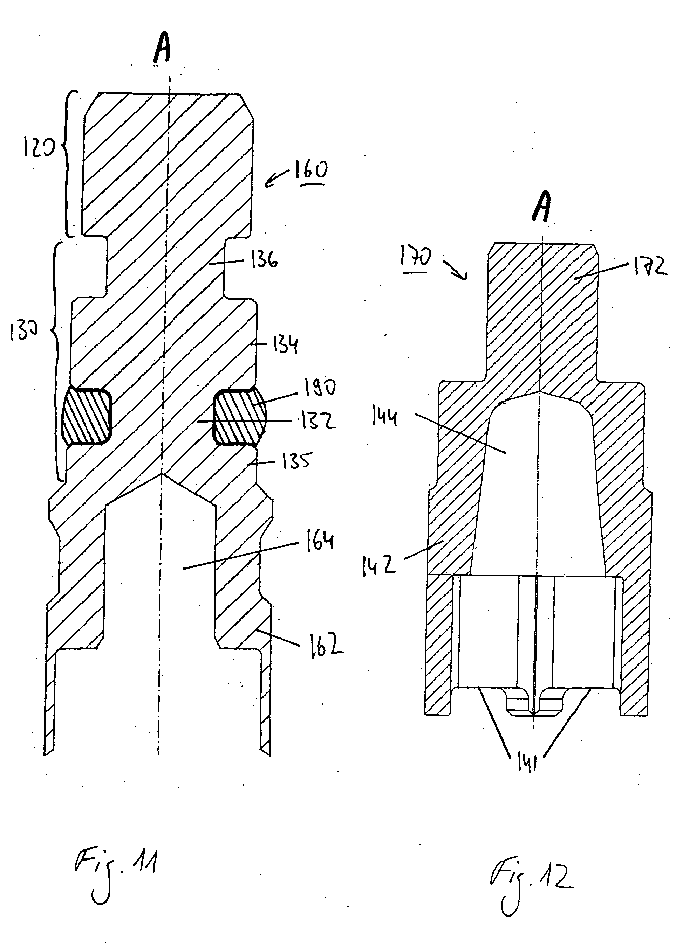

Figur 10 zeigt einen Längsschnitt durch eine zweistückige Ausführungsform eines erfindungsgemässen Adapters 110. Der Adapter weist im montierten Zustand ebenfalls entlang einer mittig angeordneten Längsachse A einen Kopfabschnitt 120, einen Halsabschnitt 130 und einen Aufnahmeabschnitt 140 auf. Der Adapter 110 setzt sich aus einem Verbindungsteil 160 aus rostfreiem Stahl, welcher in Figur 11 ebenfalls im Längsschnitt separat gezeigt ist, und einem Befestigungsteil 170 aus einer Keramik zusammen, welcher in Figur 12 ebenfalls im Längsschnitt separat gezeigt ist.

Der Kopfabschnitt 120, der Halsabschnitt 130 mit einer Schwächungszone in Form einer im Umfangsrichtung verlaufenden Nut 132, einem ersten breiten Bereich 134, einem zweiten breiten Bereich 135 und einem schmalen Bereich 136 und ein Teil des Aufnahmeabschnitts 140 sind dem Verbindungsteil 160 zugeordnet. In die Nut 132 ist eine Verstärkung in Form eines Rings 190 eingelegt. Alternativ wäre es aber auch möglich, den zweistückigen Adapter mit einer Überbrückung zu versehen. Wie insbesondere aus Figur 11 ersichtlich ist, weist der Verbindungsteil 160 an seinem vom Kopfabschnitt 120 abgewandten Ende eine Verbindungsausnehmung 164 auf, die dazu bestimmt ist, einen Befestigungsvorsprung 172 (siehe Figur 12) des Befestigungsteils 170 aufzunehmen und von einem Verbindungsmantel 162 umgeben ist.

Der Befestigungsteil 170 bildet den Rest des Aufnahmeabschnitts 140 und weist eine sacklochförmige Ausnehmung 144 zur Aufnahme des Aufbauteils des Dentalimplantats (siehe Figur 15) auf, welche von einer mantelförmigen Wandung 142 umgeben ist. Auf der im montierten Zustand dem Kopfbereich 120 abgewandten Seite weist der Befestigungsteil 170 Aussparungen 141 auf. Der Befestigungsteil 170 umfasst zudem den Befestigungsvorsprung 172, der zum Montieren des Adapters 110 in die Verbindungsausnehmung 164 des Verbindungsteils 160 eingeführt wird und fest mit diesem verbindbar ist. Zum Übertragen eines Torsionsmoments auf den Aufbauteil eines Dentalimplantats wird zunächst der Verbindungsteil 160 mit dem Befestigungsteil 170 verbunden und anschliessend der Aufbauteil in die sacklochförmige Ausnehmung 144 eingeführt. Dadurch, dass der Verbindungsteil 160 aus einer Keramik gefertigt ist, hinterlässt der erfindungsgemässe Adapter 110 keine Spuren auf dem Aufbauteil des Implantats.

Figur 13 zeigt eine weitere Ausführungsform eines einstückigen erfindungsgemässen Adapters 10, welche sich von der in den Figuren 1 und 6 gezeigten durch die Form des Aufnahmeabschnitts 40 unterscheidet: Der Aufnahmeabschnitt 40 weist vier in Umfangsrichtung regelmässig angeordnete Bereiche auf, welche auf ihrer Innenseite, d.h. im Innern der sacklochförmigen Ausnehmung 44, vier Anschlagflächen 46 (siehe Figur 14) aufweisen. Alternativ wäre es auch möglich, dass der Aufnahmeabschnitt 40 beispielsweise zwei oder sechs Anschlagflächen 46 aufweist.

Der Adapter 10 aus Figur 13 ist in Figur 14 in einer perspektivischen Ansicht dargestellt. Der Aufnahmeabschnitt 40 weist vier Bereiche 45 auf, welche auf ihrer Innenseite, d.h. im Innern der sacklochförmigen Ausnehmung 44, vier Anschlagflächen 46 aufweisen, welche im Wesentlichen parallel zur Längsachse des Adapters 10 verlaufen. Diese dienen dazu, mit entsprechenden Gegenflächen eines Aufbauteils eines Dentalimplantats eine lösbare Verbindung herzustellen und so die Übertragung eines Torsionsmoments zu ermöglichen.

Figur 15 zeigt den koronalen Teil eines Dentalimplantats 80 ebenfalls in einer perspektivischen Darstellung (nicht massstabgetreu im Vergleich zum Adapter 10 aus Figur 14). Das Dentalimplantat 80 weist einen im Wesentlichen kegelstumpfförmigen Aufbauteil 82 mit vier Gegenflächen 86 auf, welche in gleichmässigen Abständen rund um den Aufbauteil 82 angeordnet sind und in Längsrichtung des Dentalimplantats 80 verlaufen.

Mithilfe der vier Anschlagflächen 46 des Adapters 10 aus Figur 14 kann ein Torsionsmoment auf die vier entsprechenden Gegenflächen 86 des Aufbauteils 82 des Dentalimplantats 80 aus Figur 15 übertragen werden. Zu diesem Zweck wird der Aufbauteil 82 in die sacklochförmige Ausnehmung 44 des Adapters 10 eingeführt, so dass die Anschlagflächen 46 mit den Gegenflächen 86 zusammenwirken können.

## Patentansprüche

1. Adapter (10, 110) zum Übertragen eines Torsionsmoments von einem Eindrehwerkzeug (96) auf einen Aufbauteil (82) eines Dentalimplantats (80), wobei der Adapter (10, 110) entlang einer mittig angeordneten Längsachse A einen Kopfabschnitt (20, 120), einen Halsabschnitt (30, 130) und einen Aufnahmeabschnitt (40, 140) aufweist, welche starr miteinander verbunden sind, wobei der Kopfabschnitt (20, 120) derart ausgebildet ist, dass er mit dem Eindrehwerkzeug (96) zusammenwirken kann, der Halsabschnitt (30, 130) zwischen dem Kopfabschnitt (20, 120) und dem Aufnahmeabschnitt (40, 140) angeordnet ist und der Aufnahmeabschnitt (40, 140) eine mantelförmige Wandung (42, 142) aufweist, die eine sacklochförmige Ausnehmung (44, 144) zur Aufnahme des Aufbauteils (82) des Dentalimplantats (80) begrenzt, über die der Aufnahmeabschnitt (40, 140) mit dem Aufbauteil (82) des Dentalimplantats (80) durch Formschluss lösbar verbindbar ist,
wobei der Adapter (10, 110) mindestens eine Schwächungszone in Form einer in Umfangsrichtung verlaufenden Nut (32, 132) im Halsabschnitt (30, 130) aufweist und sich der Adapter (10, 110) im Bereich der Schwächungszone oberhalb eines vorgegebenen Torsionsmoments T_{deform} verformt,
**dadurch gekennzeichnet, dass**
der Adapter (10, 110) im Bereich der Schwächungszone eine separat ausgebildete Verstärkung aufweist, welche einem allfälligen bei der Übertragung des Torsionsmoments auf den Adapter (10, 110) auftretenden Biegemoment entgegenwirkt.

2. Adapter (10, 110) gemäss Anspruch 1, **dadurch gekennzeichnet, dass** die Verstärkung ein in die Nut (32, 132) eingelegter, ebenfalls in Umfangsrichtung verlaufender Ring (90, 190) ist, vorzugsweise ein O-Ring.

3. Adapter (10, 110) gemäss Anspruch 1, **dadurch gekennzeichnet, dass** die Verstärkung eine die Nut (32, 132) umgreifende, ebenfalls in Umfangsrichtung verlaufende Überbrückung (95) ist.

4. Adapter (10, 110) gemäss Anspruch 3, **dadurch gekennzeichnet, dass** die Überbrückung (95) die Nut (32, 132) und einen axial an die Nut (32, 132) angrenzenden Teil des Halsabschnitts (30, 130) umschliesst.

5. Adapter (10, 110) gemäss Anspruch 4, **dadurch gekennzeichnet, dass** die Überbrückung (95) zusätzlich in die Nut (32, 132) eingreift.

6. Adapter (10, 110) gemäss Anspruch 4 oder 5, **dadurch gekennzeichnet, dass** der Halsabschnitt (30, 130) mindestens eine weitere, in Umfangsrichtung verlaufende Vertiefung (38) aufweist, in welche die Überbrückung (95) eingreift.

7. Adapter (10, 110) gemäss einem der Ansprüche 1 bis 6, **dadurch gekennzeichnet, dass** die Verstärkung aus hartem Kunststoff oder aus Metall, insbesondere aus rostfreiem Stahl, Titan oder einer Titanlegierung, besteht.

8. Adapter (10, 110) gemäss einem der Ansprüche 1 bis 7, **dadurch gekennzeichnet, dass** der Adapter (10, 110) im Bereich der Schwächungszone oberhalb des vorgegebenen Torsionsmoments T_{deform} bricht.

9. Adapter (10, 110) gemäss einem der Ansprüche 1 bis 8, **dadurch gekennzeichnet, dass** T_{deform} grösser ist als 35 Ncm, vorzugsweise grösser als 80 Ncm, insbesondere grösser als 90 Ncm, und dass T_{deform} kleiner ist als 150 Ncm, vorzugsweise kleiner als 130 Ncm, insbesondere kleiner als 110 Ncm.

10. Adapter (10, 110) gemäss einem der Ansprüche 1 bis 9, **dadurch gekennzeichnet, dass** der Kopfabschnitt (20, 120) im Wesentlichen die Form eines polygonalen Zylinders mit mehreren, parallel zur Längsachse A verlaufenden Kanten (22) aufweist.

11. Adapter (10, 110) gemäss einem der Ansprüche 1 bis 10, **dadurch gekennzeichnet, dass** die sacklochförmige Ausnehmung (44, 144) im Wesentlichen kegelstumpfförmig ist und sich gegen den Kopfbereich (20, 120) hin verjüngt.

12. Adapter (10, 110) gemäss einem der Ansprüche 1 bis 11, **dadurch gekennzeichnet, dass** die sacklochförmige Ausnehmung (44, 144) mindestens eine Anschlagfläche (46), vorzugsweise vier Anschlagflächen (46), zum Übertragen des Torsionsmoments vom Adapter (10, 110) auf den Aufbauteil (82) aufweist, die mit je einer entsprechenden Gegenfläche (86) des Aufbauteils (82) eine bis mindestens zum Torsionsmoment T_{deform} drehsichere Verbindung bildet.

13. Adapter (10, 110) gemäss einem der Ansprüche 1 bis 12, **dadurch gekennzeichnet, dass** der Adapter (10, 110) aus Metall, insbesondere aus rostfreiem Stahl, besteht.

14. Adapter (10, 110) gemäss einem der Ansprüche 1 bis 13, **dadurch gekennzeichnet, dass** die Innenseite des Aufnahmeabschnitts (40, 140) zumindest teilweise mit einer Keramik oder mit DLC beschichtet ist.
